# EUROPÄISCHE PATENTSCHRIFT

(11) **EP 0 656 745 B1**
(45) Veröffentlichungstag und Bekanntmachung des Hinweises auf die Patenterteilung: **30.10.1996**
(21) Anmeldenummer: 93924541.1
(22) Anmeldetag: 30.08.1993
(51) Int. Cl.: A01D 82/00, A01D 43/10

(54) **VORRICHTUNG ZUR HALMGUTAUFBEREITUNG**
GRASS CONDITIONING DEVICE
DISPOSITIF DE CONDITIONNEMENT D'HERBES

(30) Priorität: 29.08.1992 DE 4228857
(43) Veröffentlichungstag der Anmeldung: 14.06.1995
(73) Patentinhaber: SAME S.p.A., I-24047 Treviglio (Bergamo) (IT)
(72) Erfinder: VON ALLWÖRDEN, Wilhelm, D-89168 Oberstotzingen (DE); HÄFELE, Martin, D-73460 Hüttlingen (DE)
(74) Vertreter: Nau, Walter, Dipl.-Ing.
(86) Internationale Anmeldenummer: EP9302347
(87) Internationale Veröffentlichungsnummer: WO9405147

(56) Entgegenhaltungen:
- EP-A- 0 205 206
- DE-A- 4 132 759
- FR-A- 590 562
- US-A- 4 035 992
- US-A- 4 445 313

## Beschreibung

Die Erfindung betrifft eine Vorrichtung zur Halmgutaufbereitung, insbesondere eingebaut in einer Grasmattenmaschine, nach dem Oberbegriff des Patentanspruchs 1.

Aus der DE 41 32 759 ist eine Vorrichtung zur Halmgutaufbereitung bekannt, bei der um eine Zentralwalze herum mehrere Planetenwalzen angeordnet sind, wobei die Planetenwalzen eine wesentlich kleineren Durchmesser aufweisen als die Zentralwalze. Diese Anordnung benötigt in einer Erntemaschine (Grasmattenmaschine) aufgrund ihrer Bauhöhe nachteiligerweise Platz, wodurch beispielsweise ein für einen Antriebsmotor der Erntemaschine vorgesehener Einbauraum eingeschränkt ist. Darüber hinaus erfordert diese Ausgestaltung unterschiedliche Walzengrößen, wodurch die Produktion und insbesondere die Ersatzteillagerung der unterschiedlichen Walzen aufwendig und kostenintensiv ist.

Aus dem Dokument US-A 4,445,313 ist - insbesondere bei Betrachtung der Figur 2 - eine Vorrichtung zur Halmgutaufbereitung bekannt, wobei der Vorrichtung geschnittenes Halmgut über einen Eintritt zugeführt wird und das aufbereitete Halmgut die Vorrichtung über einen Austritt verläßt, wobei mehrere im wesentlichen den gleichen Durchmesser aufweisende Walzen eine erste Walzenreihe und eine weitere Walzenreihe bilden, wobei die Walzenreihen einander zugeordnet sind.

Hiervon ausgehend liegt der Erfindung die Aufgabe zugrunde, eine Vorrichtung zur Halmgutaufbereitung bereitzustellen, die flach gebaut und kompakt ist sowie insbesondere in einer Serienproduktion von Erntemaschinen kostengünstig ist und eine zuverlässigere Aufbereitung des Halmgutes gegenüber dem Stand der Technik zu gewähren.

Die Aufgabe wird durch die in dem kennzeichnenden Teil des Patentanspruches 1 angegebenen Merkmale gelöst.

Die Verwendung von im wesentlichen den gleichen Durchmesser aufweisenden Walzen hat den Vorteil, daß die Herstellung (insbesondere bei einer Serienproduktion) der Vorrichtung zur Halmgutaufbereitung kostengünstig ist, da viele Gleichteile verwendet werden können. Ebenso ist es von Vorteil, daß diese Walzen eine erste und zumindest eine weitere Walzenreihe bilden, wobei die Walzenreihen einander zugeordnet sind, so daß die erfindungsgemäße Vorrichtung zur Halmgutaufbereitung flach gebaut und kompakt ist. Es ist daher die Möglichkeit gegeben, daß oberhalb der kompakt gebauten Vorrichtung zur Halmgutaufbereitung weitere Einrichtungen (wie bspw. ein Antriebsmotor) der Grasmattenmaschine angeordnet werden können. Ein getrennter Antrieb der Walzen der jeweiligen Walzenreihen hat den Vorteil, daß beliebige und den konstruktiven Gegebenheiten anpaßbare Antriebsmöglichkeiten Verwendung finden können. Denkbar sind hier Antriebe über Riemen, Zahnriemen, Ketten, hydraulische, hydrostatische oder elektrische Antriebe sowie der Antrieb einzelner Walzen. Die Wahl von voneinander verschiedenen Umfangsgeschwindigkeiten der Walzen der zumindest beiden Walzenreihen hat den Vorteil, daß das zugeführte geschnittene Halmgut zuverlässig aufbereitet (aufgespleißt, zerfasert) wird, so daß die abgelegte Grasmatte, die aus dem aufbereiteten Halmgut entsteht, schnell trocknet. Es ist denkbar, alle Walzen gemeinsam oder jeweils alle Walzen einer Walzenreihe achsparallel anzuordnen und in jeweils endseitig der Walzen befindlichen Seitenwänden (Rahmen) zu lagern.

In Weiterbildung der Erfindung sind die Achsen der Walzen der einen Walzenreihe fest (drehfest) und die Achsen der Walzen der weiteren Walzenreihe zumindest teilweise veränderbar (Lagerpunkt der Achsen verschiebbar beziehungsweise verschwenkbar) gelagert Die veränderbare Lagerung in Bezug auf eine feste Lagerung hat den Vorteil, daß der Spalt zwischen den Walzen der beiden Walzenreihen veränderbar und damit einstellbar ist. Aufgrund dieser Einstellbarkeit ist ein optimaler Aufbereitungsgrad des geschnittenen Halmgutes realisierbar. Eine Veränderung der Lagerung ist beispielsweise dadurch konstruktiv druchführbar, indem die Achsen der Walzen einer Walzenreihe federnd gelagert sind beziehungsweise hydraulisch verschiebbar sind.

In Weiterbildung der Erfindung ist eine veränderbare Lagerung aller Achsen der Walzen einer Walzenreihe derart vorgesehen, daß die Achsen fest in einem veränderbar gelagerten Rahmen angeordnet sind. Diese alternative Konstruktion hat den Vorteil, daß die Achsen der Walzen einer Walzenreihe in einem Rahmen drehfest angeordnet sind, wobei der Rahmen veränderbar (z. B. durch Feder- oder Hydraulikkraft) gelagert ist.

In einer weiteren Ausgestaltung der Erfindung sind die Achsen der Walzen zumindest einer Walzenreihe einzeln veränderbar gelagert. Diese Konstruktion hat den Vorteil, daß die veränderbare Lagerung individuell einstellbar ist und somit dem Aufbereitungsprozeß anpaßbar ist.

In einer weiteren Ausgestaltung der Erfindung sind die Walzenreihen derart zueinander angeordnet, daß der Abstand der Walzen im Bereich des Eintrittes größer ist als der Abstand der Walzen im Bereich des Austrittes, wobei die Achsen der Walzen der jeweiligen Walzenreihen in einer Ebene angeordnet sind. Diese Anordnung ist ebenfalls dazu geeignet, insbesondere in Kombination mit der voneinander verschiedenen Umfangsgeschwindigkeit der Walzen der zumindest beiden Walzenreihen den Aufbereitungsgrad zu verbessern.

In den weiteren Unteransprüchen sind vorteilhafte Ausgestaltungen und Größenangaben zu der erfindungsgemäßen Vorrichtung zur Halmgutaufbereitung angegeben. Diese und weitere Ausgestaltungen sind im folgenden beschrieben und in den einzelnen Figuren dargestellt, welche zeigen:
- Figur 1:: eine erfindungsgemäße Vorrichtung mit zwei Walzenreihen,
- Figur 2:: eine erfindungsgemäße Vorrichtung mit fest und zumindest teilweise veränderbar gelagerten Walzen,
- Figur 3:: eine erfindungsgemäße Vorrichtung mit in einem veränderbar gelagerten Rahmen angeordneten Walzen,
- Figur 4:: eine erfindungsgemäße Vorrichtung mit einzeln veränderbar gelagerten Walzen,
- Figur 5:: eine erfindungsgemäße Vorrichtung mit einem drehbar gelagerten Rahmen.

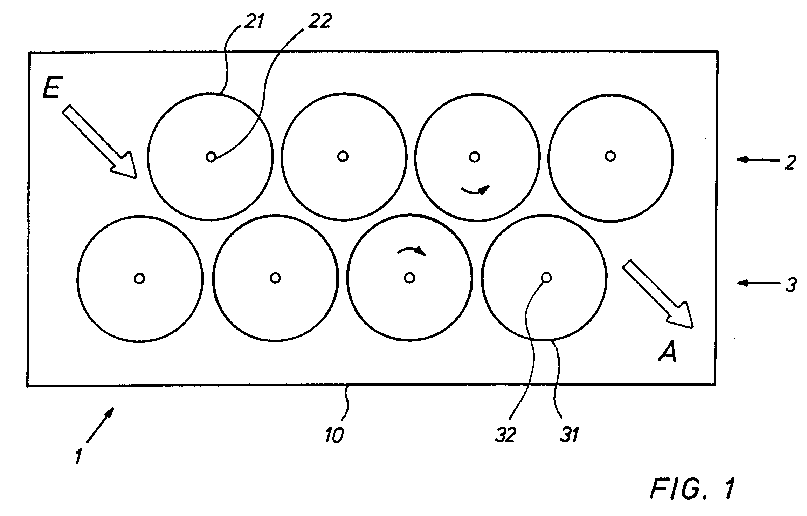

Figur 1 zeigt eine erfindungsgemäße Vorrichtung mit zwei Walzenreihen. Eine Vorrichtung 1 zur Halmgutaufbereitung weist eine erste Walzenreihe 2 sowie eine weitere Walzenreihe 3 auf. Die Vorrichtung 1 arbeitet nach der Reihenwalztechnik. Der Vorrichtung 1 wird über einen Eintritt E geschnittenes Halmgut zugeführt, während das aufbereitete Halmgut die Vorrichtung 1 über einen Austritt A verläßt. In einem Rahmen 10 der Vorrichtung 1 zur Halmgutaufbereitung sind mehrere Walzen 21 der ersten Walzenreihe 2 sowie mehrere Walzen 31 der weiteren Walzenreihe 3 gelagert. Die Walzen 21 bzw. 31 weisen Achsen 22 bzw. 32 auf, wobei die Achsen 22 und 32 endseitig in dem Rahmen 10 gelagert sind. Somit sind die Walzen 21 und 31 in dieser Ausgestaltung der Erfindung fest (drehfest) angeordnet. Die Walzen 21 bzw. 31 weisen einen gegenläufigen Drehsinn auf, wobei die Umfangsgeschwindigkeit von Walzen einer Walzenreihe unterschiedlich ist zu der Umfangsgeschwindigkeit von Walzen der anderen Walzenreihe. Alternativ zur Ausgestaltung der Vorrichtung 1 mit zwei Walzenreihen ist die Verwendung zumindest einer weiteren Vorrichtung 1 denkbar, so daß zwei Eintritte und zwei Austritte (nebeneinander oder übereinander) vorhanden sind, um das Volumen des aufzubereitenden Halmgutes zu erhöhen. Die in Figur 1 gezeigte Vorrichtung 1 zur Halmgutaufbereitung weist jeweils vier Walzen 21 bzw. 31 der jeweiligen Walzenreihe 2 bzw. 3 auf, wobei die Anzahl der Walzen beliebig ist und den konstruktiven Gegebenheiten angepaßt werden kann. In einer vorteilhaften Ausgestaltung ist die Anzahl der Walzen der ersten Walzenreihe 2 gleich der Anzahl der Walzen der weiteren Walzenreihe 3, wobei dies jedoch nicht unbedingt erforderlich ist. So kann die Anzahl der Walzen 21 der ersten Walzenreihe 2 größer oder kleiner sein als die Anzahl der Walzen 31 der weiteren Walzenreihe 3. Der Drehsinn der Walzen 21 bzw. 31 ist derart gewählt, daß das der Vorrichtung 1 zugeführte Halmgut im Bereich des Eintrittes E automatisch eingezogen und in Richtung des Austrittes A transportiert wird.

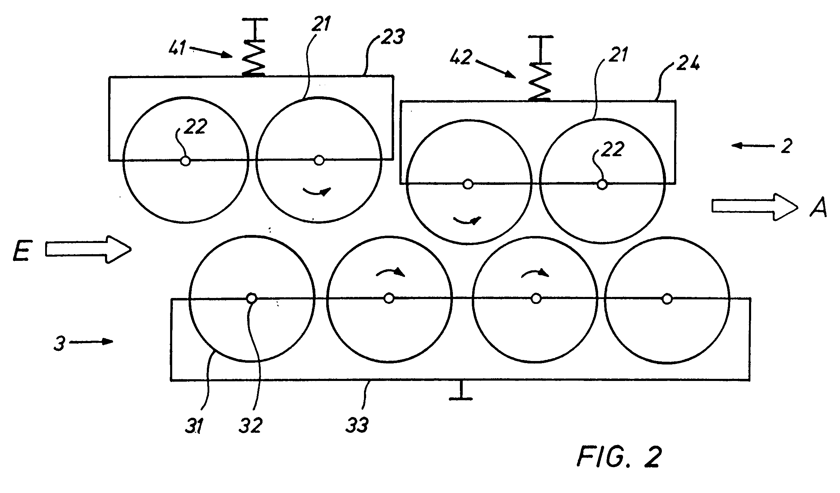

Figur 2 zeigt eine erfindungsgemäße Vorrichtung mit fest und zumindest teilweise veränderbar gelagerten Walzen. Neben den in Figur 1 gezeigten und mit den gleichen Bezugsziffern versehenen Komponenten sind die Walzen 21 der ersten Walzenreihe 2 teilweise in zumindest einem von der weiteren Walzenreihe 3 getrennten Rahmen 23 drehfest gelagert. In der in Figur 2 gezeigten Ausgestaltung besteht die erste Walzenreihe 2 aus jeweils einem Rahmen 23 und einem Rahmen 24, die die Walzen 21 derart aufnehmen, daß die in dem Rahmen 23 angeordneten Walzen 21 sich in einem größeren Abstand zu den Walzen 31 der weiteren Walzenreihe 3 befinden als die in dem Rahmen 24 angeordneten Walzen 21. Diese in Figur 2 gezeigte Anordnung hat den Vorteil, daß eine stufenweise Aufbereitung des zugeführten Halmgutes möglich ist, Während die Achsen 32 der Walzen 31 in einem Rahmen 33 der weiteren Walzenreihe 3 fest (drehfest) angeordnet sind, sind die Achsen 22 der Walzen 21 der ersten Walzenreihe zumindest teilweise derart veränderbar gelagert, daß die Veränderung (bspw. Verschiebung oder Verschwenkung) manuell, hydraulisch, elektromotorisch oder auch federnd ausführbar ist. So ist in Figur 2 gezeigt, daß die Rahmen 23 und 24 mit Federn 41 und 42 veränderbar gelagert sind (bspw. in einer nicht gezeigten Führung) wobei sich die Federn 41 und 42 gegen ein festes Ende (bspw. ein Rahmen oder eine Trägerkonstruktion der Grasmattenmaschine) abstützen. Es ist denkbar, die Federkraft der beiden Federn 41 und 42 gleich oder unterschiedlich auszulegen, insbesondere zur Erreichung unterschiedlicher Abstände der Walzen zueinander (wie in Figur 2 gezeigt). Der Rahmen 33 stützt sich ebenfalls gegen ein festes Ende ab oder stellt alternativ dazu selber ein festes Ende dar. Mit der federnden Abstützung ist eine einfache Sicherung gegen Fremdkörper gegeben, wobei die Federung bei Durchlauf des Fremkörpers nachgibt.

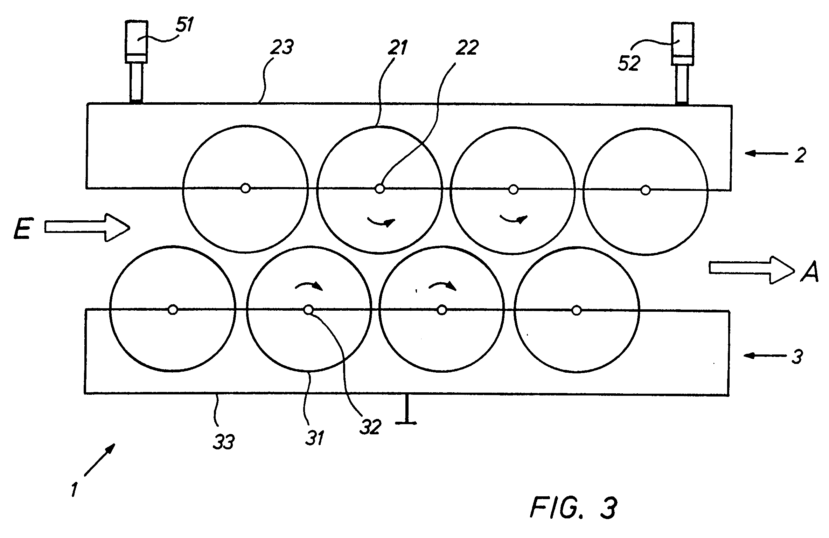

Figur 3 zeigt eine erfindungsgemäße Vorrichtung mit in einem veränderbar gelagerten Rahmen angeordneten Walzen. Die in Figur 3 gezeigte Vorrichtung 1 zur Halmgutaufbereitung ist dadurch gekennzeichnet, daß eine veränderbare Lagerung aller Achsen 22 der Walzen 21 der ersten Walzenreihe 2 derart vorgesehen ist, daß die Achsen 22 fest in einem veränderbar gelagerten Rahmen 23 angeordnet sind. Die veränderbare Lagerung des Rahmens 23 bzw. der Achsen 22 erfolgt mittels Hydraulikzylinder 51 und 52, die mit einem gleichen bzw. mit einem unterschiedlichen Hydraulikdruck betreibbar sind. Alternativ zu der in Figur 2 gezeigten Ausführung ist es ebenfalls denkbar, daß die erste Walzenreihe 2 fest angeordnet und die weitere Walzenreihe 3 veränderbar gelagert angeordnet ist Der Rahmens 33 der weiteren Walzenreihe 3 ist wiederrum fest. Darüber hinaus ist es denkbar, daß auch der Rahmen 33 veränderbar gelagert ist (z. B. zur Erreichung einer gedämpften Aufhängung).

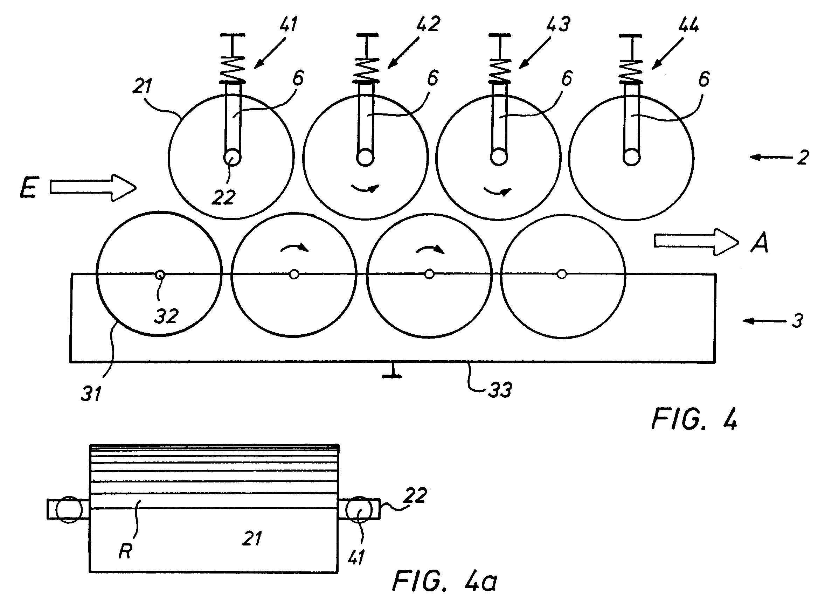

Figur 4 zeigt eine erfindungsgemäße Vorrichtung mit einzelnen veränderbar gelagerten Walzen. Neben den in den vorangegangenen Figuren gezeigten und mit den gleichen Bezugsziffern versehenen Komponenten sind die Walzen 21 der ersten Walzenreihe 2 über Führungselemente 6 und Federn 41 bis 44 einzeln veränderbar gelagert Alternativ ist dazu die einzelne veränderbare Lagerung mittels einer manuellen Einstellung (bspw. Spindel) hydraulisch oder auch elektromotorisch durchführbar. Insbesondere die gefederte Einzelaufhängung der Walzen 21 (alternativ dazu der Walzen 31) hat den Vorteil, daß unterschiedliche Volumina von zugeführtem Halmgut ohne Unterbrechung des Aufbereitungsprozeßes verarbeitbar sind. In Figur 4a ist eine Walze 21 gezeigt, deren endseitiger Teil der Achsen 22 gegen die Kraft der Feder (bspw. Feder 41) sowie über das in dieser Figur nicht gezeigte Führungselement (6) gelagert ist Darüber hinaus weist die Walze 21 (und insbesondere alle Walzen der ersten Walzenreihe 2 sowie der weiteren Walzenreihe 3) eine Riffelung R auf, die insbesondere achsparallel zu den Achsen 22 bzw. 32 angeordnet ist, so daß dadurch ein optimaler Aufbereitungsprozeß (Zerfaserung) und ein Weitertransport des zugeführten Halmgutes gewährleistet ist. Darüber hinaus sind weitere geometrische Strukturen (Zum Beispiel Rauten) als Profilierung denkbar. Das Profil kann in den Walzen eingebracht oder auf diesen aufgebracht werden.

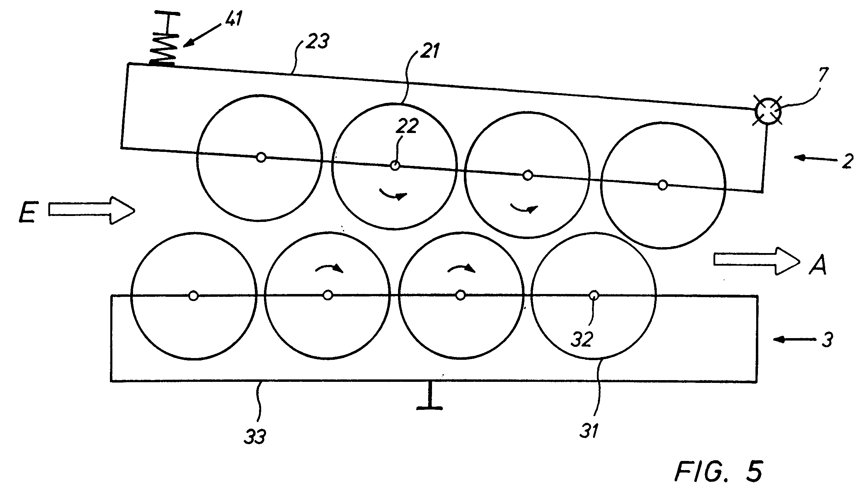

Figur 5 zeigt eine erfindungsgemäße Vorrichtung mit einem drehbar gelagerten Rahmen. Die in dieser Figur 5 gezeigten Walzenreihen 2 bzw. 3 sind derart zueinander angeordnet, daß der Abstand der Walzen 21, 31 im Bereich des Eintrittes E größer ist als der Abstand der Walzen 21, 31 im Bereich des Austrittes A, wobei die Achsen 22 bzw. 32 der Walzen 21 bzw. 31 der jeweiligen Walzenreihe 2 bzw. 3 in einer Ebene angeordnet sind. In Figur 5 ist gezeigt, daß der Rahmen 23 der ersten Walzenreihe 2 um einen Drehpunkt 7 (drehfester Punkt) gelagert ist und das Abstandsmaß im Bereich des Eintrittes E zwischen den Walzen 21 und 31 durch die Kraft einer Feder 41 weitgehend konstant gehalten wird. Diese Ausgestaltung hat den Vorteil, daß zum einen die Kräfte auf das Halmgut, das die Vorrichtung 1 durchläuft, vom Bereich des Eintrittes E zum Bereich des Austrittes A zunehmen und ein schonender Aufbereitungsprozeß realisierbar ist. Zum anderen ist es möglich, im Falle einer Störung des Aufbereitungsprozeßes (z. B. durch Verschmutzung der Vorrichtung 1 durch Fremdkörper) den Rahmen 23 zu verschwenken und die Störung zu beheben. Alternativ zu einer achsparallelen Anordnung des Drehpunktes 7 zu den Achsen 22 ist eine Anordnung des Drehpunktes 7 im rechten Winkel zu den Achsen 22 (bzw. 32) denkbar, so daß zur Beseitigung von Störungen der Rahmen 32 ebenfalls verschwenkbar (klappbar) ist. Eine solche Anordnung ist sowohl bei der in Figur 5 gezeigten Ausgestaltung der Erfindung als auch bei den in Figur 2 und 3 gezeigten Anordnungen denkbar.

Die in den vorangegangenen Figuren gezeigten Achsen sind erfindungsgemäß zumindest teilweise einzeln und/oder gemeinsam antreibbar. Dies kann in geeigneter Weise mittels eines Ketten-, Riemen-, oder Zahnradantriebes, mittels eines hydraulischen oder mittels eines elektromotorischen Antriebes erfolgen. In einer Ausgestaltung der Erfindung sind jeweils die Walzen einer Walzenreihe gemeinsam antreibbar, wobei zur Realisierung eines optimalen Aufbereitungsprozeßes ein Verhältnis der Umfangsgeschwindigkeiten zwischen den Walzen der ersten und der weiteren Walzenreihe im Bereich zwischen 1:1,1 und 1:10 vorgesehen ist. Ebenso ist es denkbar, daß die unterschiedlichen Umfangsgeschwindigkeiten der Walzen der zumindest beiden Walzenreihen in Abhängigkeit einer der Vorrichtung 1 im Bereich des Eintrittes E vorgeschalteten Schneid- und Zufuhreinrichtung einstellbar ist, so daß je nach Volumen des zugeführten Halmgutes eine Stauung bzw. ein Leerlauf weitgehend vermeidbar ist. Ebenso ist es zur Optimierung des Aufbereitungsprozeßes vorgesehen, daß die Umfangsgeschwindigkeit der Walzen zumindest einer Walzenreihe beginnend vom Eintritt E zum Austritt A stetig zunehmend ausgelegt ist, Dies kann beispielsweise durch geeignete Wahl des Übersetzungsverhältnisses des entsprechenden Antriebes der Walzen realisiert werden. Es sei noch darauf hingewiesen, daß das Abstandsmaß zwischen den Walzen der ersten Walzenreihe und den Walzen der weiteren Walzenreihe konstant oder veränderbar ist. Bei einem veränderbaren Abstandsmaß ist es denkbar, die Veränderung über einen gesamten Bereich durch die Veränderung der Federkraft (bzw. der Hydraulik) zuzulassen oder in einen Bereich einer veränderbaren Voreinstellung und der Veränderung gegen die Federkraft aufzuteilen. Ebenso ist es denkbar, die Federkraft bzw. die Hydraulikkraft, aber auch die Voreinstellung (bspw. manuell mittels einer Spindel) in Abhängigkeit von Paramtern des Ernteprozeßes (bspw. Volumen des zugeführten Halmgutes) sowie in Abhängigkeit von fahrzeugspezifischen Parametern (bspw. Geschwindigkeit) zu regeln bzw. zu automatisieren.

## Patentansprüche

1. Vorrichtung zur Halmgutaufbereitung, insbesondere eingebaut in einer Grasmattenmaschine, wobei der Vorrichtung geschnittenes Halmgut über einen Eintritt zugeführt wird und das aufbereitete Halmgut die Vorrichtung über einen Austritt verläßt, wobei mehrere im wesentlichen den gleichen Durchmesser aufweisende und gegenläufige Walzen (21, 31) eine erste Walzenreihe (2) und eine weitere Walzenreihe (3) bilden, wobei die Walzenreihen (2, 3) einander zugeordnet sind,
*dadurch gekennzeichnet,* daß die Walzen (21) der ersten Walzenreihe (2) von den Walzen (31) der weiteren Walzenreihe (3) getrennt antreibbar sowie die Umfangsgeschwindigkeit der Walzen (21, 31) der beiden Walzenreihen (2, 3) voneinander verschieden sind.

2. Vorrichtung nach Anspruch 1,
*dadurch gekennzeichnet,* daß die Achsen (32) der Walzen (31) der weiteren Walzenreihe (3) fest und die Achsen (22) der Walzen (21) der ersten Walzenreihe (2) zumindest teilweise veränderbar gelagert sind.

3. Vorrichtung nach Anspruch 1 oder 2,
*dadurch gekennzeichnet,* daß eine veränderbare Lagerung aller Achsen (22 bzw. 32) der Walzen (21 bzw. 31) einer Walzenreihe (2 bzw. 3) derart vorgesehen ist, daß die Achsen fest in einem veränderbar gelagerten Rahmen (23, 24, 33) angeordnet sind.

4. Vorrichtung nach einem der vorhergehenden Ansprüche,
*dadurch gekennzeichnet,* daß die Achsen (22 bzw. 32) der Walzen (21 bzw. 31) zumindest einer Walzenreihe (2 bzw. 3) einzeln veränderbar gelagert sind.

5. Vorrichtung nach einem der vorhergehenden Ansprüche,
*dadurch gekennzeichnet,* daß die Walzenreihen (2, 3) derart zueinander angeordnet sind, daß der Abstand der Walzen im Bereich des Eintrittes (E) größer ist als der Abstand der Walzen im Bereich des Austrittes (A), wobei die Achsen der Walzen der jeweiligen Walzenreihen (2, 3) in einer Ebene angeordnet sind.

6. Vorrichtung nach einem der vorhergehenden Ansprüche,
*dadurch gekennzeichnet,* daß die Walzen (21 bzw. 31) einer Walzenreihe (2 bzw. 3) zumindest teilweise einzeln und/oder gemeinsam antreibbar sind.

7. Vorrichtung nach einem der vorhergehenden Ansprüche,
*dadurch gekennzeichnet,* daß die unterschiedliche Umfangsgeschwindigkeit der Walzen (21, 31) der zumindest beiden Walzenreihen (2, 3) in Abhängigkeit einer der Vorrichtung vorgeschalteten Schneid- und Zufuhreinrichtung einstellbar ist.

8. Vorrichtung nach einem der vorhergehenden Ansprüche,
*dadurch gekennzeichnet,* daß ein Verhältnis der Umfangsgeschwindigkeiten zwischen den Walzen (21, 31) der ersten und der zumindest weiteren Walzenreihe (2, 3) im Bereich zwischen 1:1,1 und 1:10 vorgesehen ist.

9. Vorrichtung nach einem der vorhergehenden Ansprüche,
*dadurch gekennzeichnet,* daß die Umfangsgeschwindigkeit der Walzen (21 bzw. 31) zumindest einer Walzenreihe (2 bzw. 3) beginnend vom Eintritt zum Austritt stetig zunehmend ausgelegt ist.

10. Vorrichtung nach einem der vorhergehenden Ansprüche,
*dadurch gekennzeichnet,* daß die Walzen (21, 31) zumindest teilweise auf dem Außenumfang eine rauhe Oberfläche (Riffelung R) aufweisen.

## Claims

1. A device for processing stalk material, especially incorporated in a grass matting machine, the device being supplied with cut stalk material through an inlet and the processed stalk material leaving the device through an outlet, a number of rollers (21, 31) having substantially the same diameter and rotating in opposite directions making up a first row (2) and a second row (3), the rows (2, 3) being associated with one another,
*characterised in that* the rollers (21) in the first row (2) are drivable separately from the rollers (31) in the second row (3), and the peripheral speeds of the rollers (21, 31) in the two rows (2, 3) are different.

2. A device according to claim 1,
*characterised in that* the shafts (32) of the rollers (31) in the second row (3) are fixed and the shafts (22) of the rollers (21) in the first row (2) are at least partly adjustably supported.

3. A device according to claim 1 or claim 2,
*characterised in that* an adjustable support of all the shafts (22 or 32) of the rollers (21 or 31) in one row (2 or 3) is provided in such a way that the shafts are fixed in an adjustably supported frame (23, 24, 33).

4. A device according to any one of the preceding claims,
*characterised in that* the shafts (22 or 32) of the rollers (21 or 31) in at least one row (2 or 3) are individually adjustably supported.

5. A device according to any one of the preceding claims,
*characterised in that* the rows (2, 3) are disposed relative to one another so that the distance between the rollers in the region of the inlet (E) is greater than the distance between the rollers in the region of the outlet (A), the axes of the rollers in each row (2, 3) being disposed in a plane.

6. A device according to any one of the preceding claims,
*characterised in that* the rollers (21 or 33) in a row (2 or 3) are drivable at least partly individually and/or together.

7. A device according to any one of the preceding claims,
*characterised in that* the different peripheral speeds of the rollers (21, 31) in the at least two rows (2, 3) are adjustable in dependence on an upstream cutting and supply device.

8. A device according to any one of the preceding claims,
*characterised in that* the ratio of the peripheral speeds between the rollers (21, 31) in the first row and the at least one other row (2, 3) are in the range between 1 : 1.1 and 1 : 10.

9. A device according to any one of the preceding claims,
*characterised in that* the peripheral speed of the rollers (21 or 31) in at least one row (2 or 3) is designed to increase progressively towards the outlet, beginning from the inlet.

10. A device according to any one of the preceding claims,
*characterised in that* the rollers (21, 31) have a rough surface (grooves R) on at least part of their outer periphery.

## Revendications

1. Dispositif pour préparer des végétaux en tiges, notamment destiné à être monté dans une machine formant une nappe d'herbe, le dispositif recevant en entrée les végétaux en tiges, coupés, et ces végétaux, traités, sortant du dispositif par une sortie, plusieurs cylindres (21, 31) essentiellement de même diamètre et tournant en sens opposé, formant une première rangée de cylindres (2) et une autre rangée de cylindres (3), les rangées de cylindres (2, 3) étant associées,
caractérisé en ce que
les cylindres (21) de la première rangée de cylindres (2) peuvent être entraînés séparément des cylindres (31) de l'autre rangée de cylindres (3), et les vitesses périphériques des cylindres (21, 31) des deux rangées de cylindres (2, 3) sont différentes.

2. Dispositif selon la revendication 1,
caractérisé en ce que
les axes (32) des cylindres (31) de l'autre rangée de cylindres (3) sont fixes et les axes (22) des cylindres (21) de la première rangée de cylindres (2) sont montés de manière au moins partiellement réglable.

3. Dispositif selon la revendication 1 ou 2,
caractérisé par
un montage réglable de tous les axes (22, 32) des cylindres (21, 31) d'une rangée de cylindres (2, 3) de façon que les axes soient associés à un châssis (23, 24, 33) monté de manière réglable.

4. Dispositif selon l'une des revendications précédentes,
caractérisé en ce que
les axes (22, 32) des cylindres (21, 31) d'au moins une rangée de cylindres (2, 3) sont montés de manière réglable séparément.

5. Dispositif selon l'une des revendications précédentes,
caractérisé en ce que
les rangées de cylindres (2, 3) sont associées pour que la distance des cylindres au niveau de l'entrée (E) soit supérieure à la distance des cylindres au niveau de la sortie (A), les axes des cylindres de chaque rangée de cylindres (2, 3) étant situés dans un plan.

6. Dispositif selon l'une des revendications précédentes,
caractérisé en ce que
les cylindres (21, 31) d'une rangée de cylindres (2, 3) sont entraînés au moins partiellement séparément et/ou en commun.

7. Dispositif selon l'une des revendications précédentes,
caractérisé en ce que
la vitesse périphérique différente des cylindres (21, 31) au moins des deux rangées de cylindres (2, 3) est réglable en fonction d'une installation de coupe et d'alimentation en amont du dispositif.

8. Dispositif selon l'une des revendications précédentes,
caractérisé en ce que
le rapport des vitesses périphériques des cylindres (21, 31) de la première et d'au moins une autre rangée de cylindres (2, 3) se situe dans une plage comprise entre 1:1,1 et 1:10.

9. Dispositif selon l'une des revendications précédentes,
caractérisé en ce que
la vitesse périphérique des cylindres (21, 31) d'au moins une rangée de cylindres (2, 3) augmente en continu, de l'entrée à la sortie.

10. Dispositif selon l'une des revendications précédentes,
caractérisé en ce que
les cylindres (21, 31) présentent sur au moins une partie de leur périphérie, une surface extérieure rugueuse (moletage R).
